# EUROPEAN PATENT APPLICATION

(11) **EP 3 829 022 A1**
(43) Date of publication of application: **02.06.2021**
(21) Application number: 21150672.0
(22) Date of filing: 08.01.2019
(51) Int. Cl.: H02J 7/00

(54) **CHARGER FOR PORTABLE BATTERY**

(30) Priority: 12.03.2018 JP 2018044465
(62) Divisional of application: 19768048.1
(71) Applicant: HONDA MOTOR CO., LTD., Minato-ku Tokyo 107-8556 (JP)
(72) Inventor: Kuramochi, Akira, Wako-shi, Saitama 351-0193 (JP); Okubo, Katsuyuki, Wako-shi, Saitama 351-0193 (JP); Ito, Kazuhiro, Wako-shi, Saitama 351-0193 (JP); Mitsukawa, Makoto, Wako-shi, Saitama 351-0193 (JP); Handa, Etsumi, Wako-shi, Saitama 351-0193 (JP); Numata, Takeo, Wako-shi, Saitama 351-0193 (JP); Hayashi, Yuji, Wako-shi, Saitama 351-0193 (JP); Tamaki, Kenji, Wako-shi, Saitama 351-0193 (JP); Sota, Natsuko, Wako-shi, Saitama 351-0193 (JP); Ikegami, Kentaro, Wako-shi, Saitama 351-0193 (JP)
(74) Representative: Beder, Jens

(57) **Abstract**

A charger for a portable battery includes a stage (8) on which a portable battery (45) used in an electric vehicle can be placed, and a terminal portion (9) that is provided at a position on a side opposite to a position on a side on which the battery (45) is to be placed with respect to the stage (8) in a state in which the battery (45) is not placed on the stage (8). The stage (8) moves together with the battery (45) to fit the battery (45) to the terminal portion (9) when the battery (45) is placed on the stage (8). The charger further includes a buffer mechanism (10) that suppresses a fitting speed of the battery (45) to the terminal portion (9) when the battery (45) is placed on the stage (8).

## Description

### TECHNICAL FIELD

The present invention relates to a charger for a portable battery.

Priority is claimed on Japanese Patent Application No. 2018-044465, filed March 12, 2018, the content of which is incorporated herein by reference.

### BACKGROUND ART

In the related art, as a charger that charges a battery used in an electric vehicle, for example, a charger disclosed in Patent Document 1 is known. This charger is configured such that mechanical and electrical connection and disconnection can be freely performed with respect to a battery removed from an electrically assisted bicycle.

### RELATED ART DOCUMENT

### PATENT DOCUMENT

Patent Document 1: Japanese Unexamined Patent Application, First Publication No. 2014-180208

### SUMMARY

### PROBLEMS TO BE SOLVED BY THE INVENTION

Incidentally, a battery used in a saddle-ride type electric vehicle such as a motorcycle has a heavy weight. Thus, in this type of battery charger, it is desired to suppress a load acting on a terminal portion of the charger as much as possible when the battery is fitted to the terminal portion.

Therefore, an object of the present invention is to provide a charger for a portable battery that suppresses a load acting on a terminal portion of the charger as much as possible when the battery is fitted to the terminal portion.

### MEANS FOR SOLVING THE PROBLEM

An aspect of the present invention employs the following configurations.
(1) A charger for a portable battery according to an aspect of the present invention includes a stage (8) on which a portable battery (45) used in an electric vehicle can be placed; and a terminal portion (9) that is provided at a position on a side opposite to a position on a side on which the battery (45) is to be placed with respect to the stage (8) in a state in which the battery (45) is not placed on the stage (8), wherein the stage (8) moves together with the battery (45) to fit the battery (45) to the terminal portion (9) when the battery (45) is placed on the stage (8), and wherein the charger further includes a buffer mechanism (10) that suppresses a fitting speed of the battery (45) to the terminal portion (9) when the battery (45) is placed on the stage (8).
(2) In the charger for a portable battery according to the aspect of (1), the stage (8) may be movable in a vertical direction, and the terminal portion (9) may be disposed below the stage (8) in a state in which the battery (45) is not placed on the stage (8).
(3) In the charger for a portable battery according to the aspect of (1) or (2), the stage (8) may have a rectangular shape when viewed in a moving direction of the stage (8), and a plurality of the buffer mechanisms (10) may be disposed point-symmetrically on opposite sides of the stage (8) with a center position (PI) of the stage (8) as a center of symmetry when viewed in the moving direction.
(4) The charger for a portable battery according to the aspect of any one of (1) to (3) may further include a guide mechanism (11) that guides the stage (8) when the battery (45) is placed on the stage (8), wherein a plurality of the guide mechanisms (11) may be disposed to surround a centroid position (P2) of the battery (45) when viewed in a moving direction of the stage (8).
(5) In the charger for a portable battery according to the aspect of (4), the stage (8) may have a rectangular shape when viewed in a moving direction of the stage (8), and the plurality of guide mechanisms (11) may be disposed with one on each of three sides of the stage (8).
(6) In the charger for a portable battery according to the aspect of (4) or (5), the stage (8) may have a rectangular shape when viewed in a moving direction of the stage (8), and a plurality of the buffer mechanisms (10) may be disposed to interpose the guide mechanism (11) therebetween on at least one side of the stage (8) when viewed in the moving direction.
(7) In the charger for a portable battery according to the aspect of any one of (1) to (6), the charger (1) may be provided with an opening (39) that is open so that the battery (45) can be inserted and taken out therethrough, and the stage (8) may be disposed inside the opening (39).
(8) In the charger for a portable battery according to the aspect of any one of (1) to (7), the charger (1) may be provided with an opening (39) that is open so that the battery (45) can be inserted and taken out therethrough, and the terminal portion (9) may be disposed at a position lower than that of a portion (47) that most protrudes toward the terminal portion (9) when the battery (45) is obliquely inserted into the battery opening (39).

### ADVANTAGE OF THE INVENTION

According to the charger for a portable battery according to the aspect of (1) of the present invention, a buffer mechanism that suppresses a fitting speed of the battery to a terminal portion when the battery is placed on a stage is provided, so that the following effects are exhibited. When the battery is fitted to the terminal portion, the fitting speed of the battery to the terminal portion is suppressed by the buffer mechanism, and thus it is possible to avoid the occurrence of impact on the terminal portion. Therefore, when the battery is fitted to the terminal portion of the charger, a load acting on a terminal portion can be suppressed as much as possible.

According to the charger for a portable battery according to the aspect of (2) of the present invention, the stage is movable in a vertical direction, and the terminal portion is disposed below the stage in a state in which the battery is not placed on the stage, so that the following effects are exhibited. Even in a case in which the battery is placed on the stage from above, when the battery is fitted to the terminal portion, the fitting speed of the battery to the terminal portion is suppressed by the buffer mechanism, and thus a load acting on the terminal portion can be suppressed as much as possible.

According to the charger for a portable battery according to the aspect of (3) of the present invention, the stage has a rectangular shape when viewed in a moving direction of the stage, and a plurality of the buffer mechanisms are disposed point-symmetrically on opposite sides of the stage with a center position of the stage as a center of symmetry when viewed in the moving direction, so that the following effects are exhibited. The plurality of buffer mechanisms are disposed in a balanced manner in a peripheral direction with respect to the centroid position of the battery, so that, when the battery is fitted to the terminal portion, a load acting on the terminal portion can be suppressed in a balanced manner. In addition, since a load on the buffer mechanisms can be reduced as compared with a configuration provided with only one buffer mechanism, it is possible to sufficiently ensure a function (a buffer function) while improving durability of the buffer mechanism.

According to the charger for a portable battery according to the aspect of (4) of the present invention, a guide mechanism that guides the stage when the battery is placed on the stage is further provided, and a plurality of the guide mechanisms are disposed to surround a centroid position of the battery when viewed in a moving direction of the stage, so that the following effects are exhibited. The plurality of guide mechanisms are disposed at intervals in the peripheral direction to surround the centroid position of the battery, so that, when the battery is placed on the stage, the stage can be smoothly moved toward the terminal portion.

According to the charger for a portable battery according to the aspect of (5) of the present invention, the stage has a rectangular shape when viewed in a moving direction of the stage, and the plurality of guide mechanisms are disposed with one on each of the three sides of the stage, so that the stage can be smoothly moved while minimizing the number of guide mechanisms.

According to the charger for a portable battery according to the aspect of (6) of the present invention, the stage has a rectangular shape when viewed in a moving direction of the stage, and a plurality of the buffer mechanisms are disposed to interpose the guide mechanism therebetween on at least one side of the stage when viewed in the moving direction, so that the following effects are exhibited. The plurality of buffer mechanisms are disposed in a balanced manner with respect to the position of the guide mechanism as compared with a configuration in which only one buffer mechanism is disposed on one side of the stage, so that the battery can be smoothly fitted to the terminal portion. In addition, since a load on the buffer mechanisms can be reduced as compared with the configuration in which only one buffer mechanism is disposed, it is possible to sufficiently ensure a function (a buffer function) while improving durability of the buffer mechanism.

According to the charger for a portable battery according to the aspect of (7) of the present invention, the charger is provided with an opening that is open so that the battery can be inserted and taken out therethrough, and the stage is disposed inside the opening, so that the portion of the charger where the opening is formed can have the function of guiding the battery.

According to the charger for a portable battery according to the aspect of (8) of the present invention, the charger is provided with an opening that is open so that the battery can be inserted and taken out therethrough, and the terminal portion is disposed at a position lower than that of a portion that most protrudes toward the terminal portion when the battery is obliquely inserted into the opening, so that the following effects are exhibited. Even in a case in which the battery is inserted into the opening at an incorrect angle, the battery does not come into contact with the terminal portion, and thus the terminal portion can be sufficiently protected.

### BRIEF DESCRIPTION OF THE DRAWINGS

Fig. 1 is a perspective view of a charger according to an embodiment.
Fig. 2 is a top view of the charger according to the embodiment.
Fig. 3 is a bottom view of the charger according to the embodiment.
Fig. 4 is a front view of the charger according to the embodiment.
Fig. 5 is a view including a cross section along line V-V of Fig. 2.
Fig. 6 is a perspective view of an inside of the charger according to the embodiment.
Fig. 7 is a view with a lid and a connection column removed from Fig. 6.
Fig. 8 is a perspective view of a peripheral portion of a drain pipe according to the embodiment.
Fig. 9 is a top view showing the charger according to the embodiment together with a battery.
Fig. 10 is a rear view showing the charger according to the embodiment together with the battery.
Fig. 11 is an explanatory view of a disposition position of a terminal portion according to the embodiment.
Fig. 12 is a perspective view of an internal structure of a charger according to a modification example of the embodiment.
Fig. 13 is a perspective view showing a state in which a stage according to the modification example of the embodiment is located at the uppermost position.
Fig. 14 is a perspective view showing a state in which the stage according to the modification example of the embodiment is moved to the lowermost position.

### DESCRIPTION OF THE EMBODIMENTS

Hereinafter, an embodiment of the present invention will be described with reference to the drawings. In each drawing, the same reference numerals are given to the same configurations. In the embodiment, as an example of a charger for a portable battery, a charger for a portable battery (a mobile battery) used in an electric motorcycle (a saddle-ride type electric vehicle) will be described. In the embodiment, an installation surface on which a charger (hereinafter, also simply referred to as a "charger") of a portable battery (hereinafter, also simply referred to as a "battery") is installed is referred to as an indoor flat floor surface.

### <Charger 1>

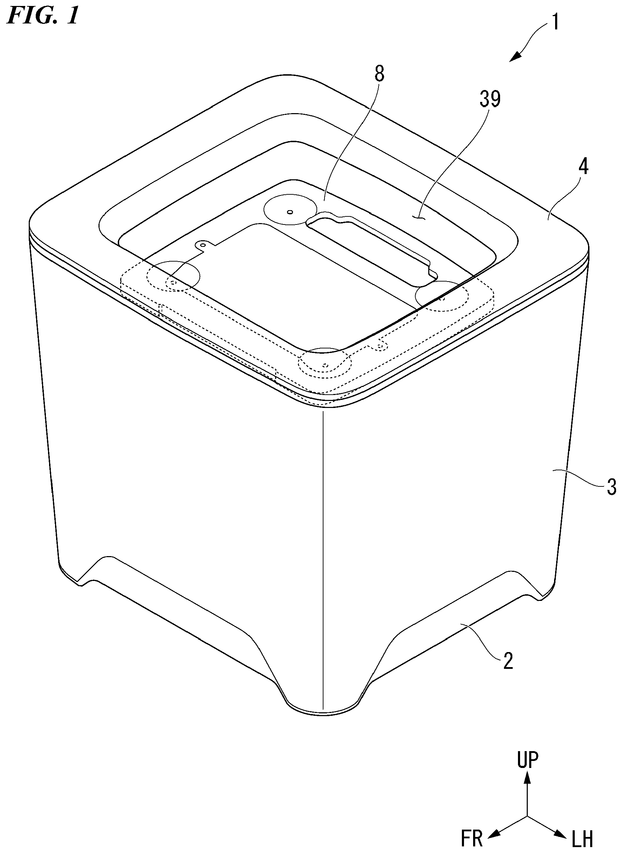

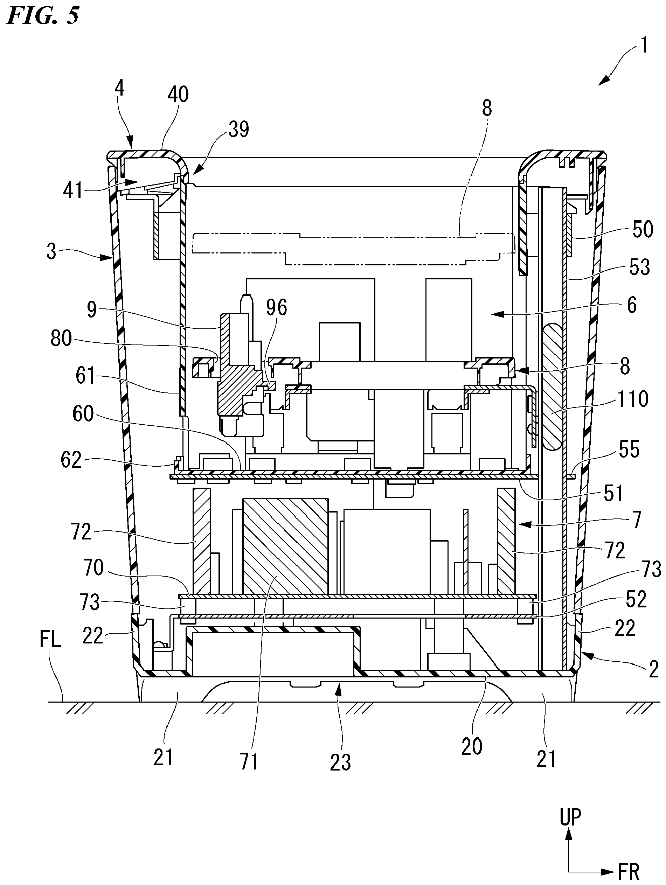

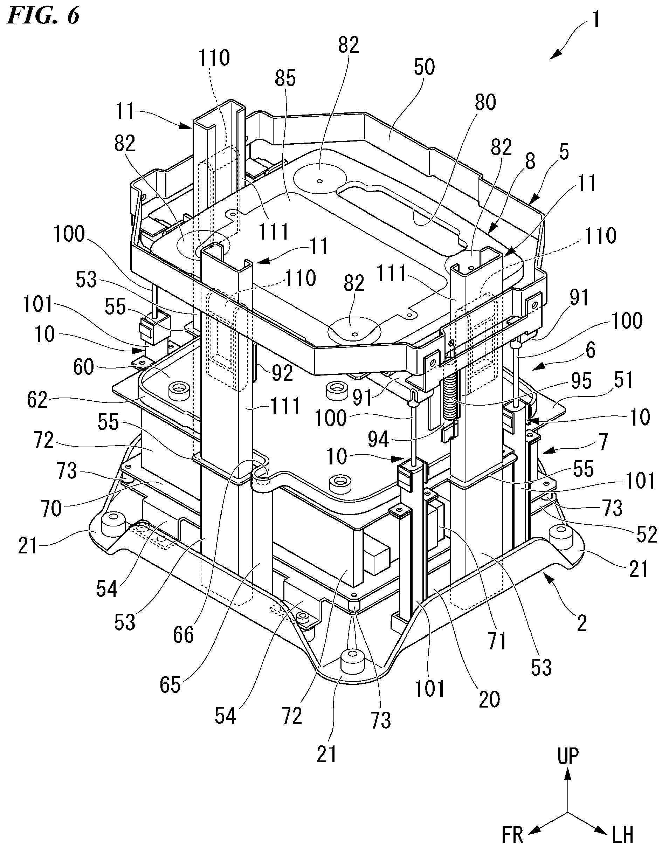

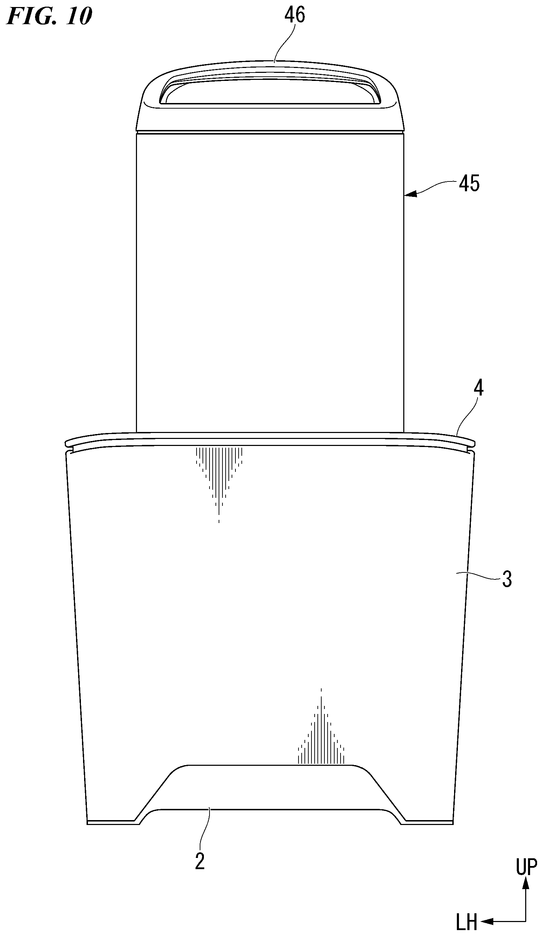

As shown in Fig. 1, the charger 1 includes a base 2 that constitutes a bottom portion of the charger 1, an exterior body 3 that constitutes a side wall of the charger 1, a cover member 4 that forms an opening 39 (hereinafter, also referred to as a "battery opening 39") that is open so that a battery 45 (see Fig. 10) can be inserted and taken out therethrough, a frame 5 (see Fig. 6) that constitutes a skeleton of the charger 1, a battery chamber 6 (see Fig. 5) on which the battery 45 is placed, a board chamber 7 (see Fig. 5) that stores a board for performing control to charge the battery 45, a stage 8 on which the battery 45 can be placed, a terminal portion 9 (see Fig. 5) which can be fitted to the battery 45, a buffer mechanism 10 (see Fig. 6) that suppresses a fitting speed of the battery 45 to the terminal portion 9, and a guide mechanism 11 (see Fig. 6) that guides the stage 8.

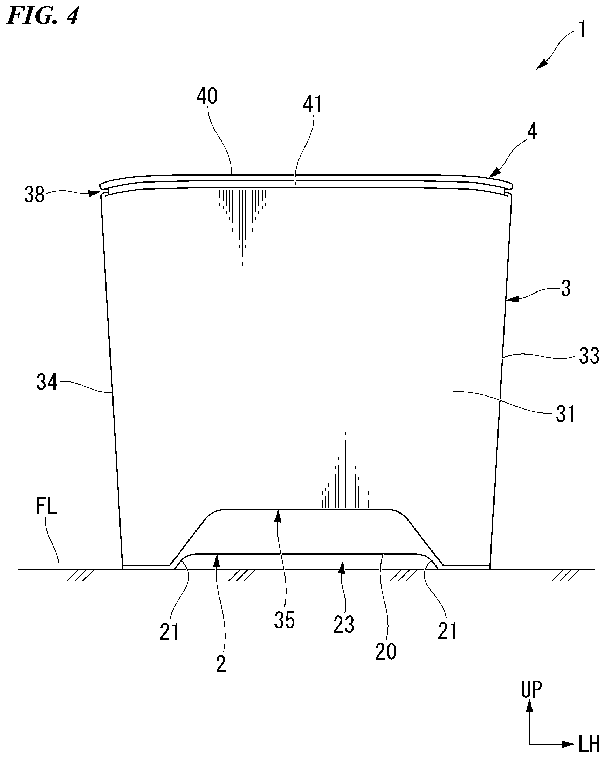

In the following description, a depth direction when the charger 1 is installed on a floor surface FL (a direction orthogonal to a paper surface shown in Fig. 4) is referred to as a "front-rear direction," a normal direction (a perpendicular direction) of the floor surface FL is referred to as a "vertical direction," and a direction orthogonal to the front-rear direction and the vertical direction is referred to as a "left-right direction." In the drawings, a forward direction is indicated by arrow FR, an upward direction is indicated by arrow UP, and a left direction is indicated by arrow LH.

### <Base 2>

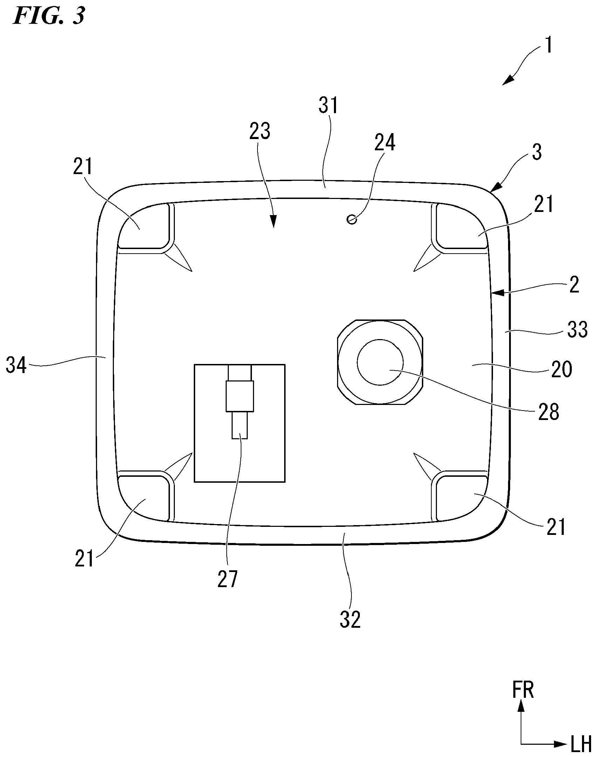

In a bottom view of Fig. 3, the base 2 has a rectangular shape with a long dimension in the left-right direction. Four corners of the base 2 each have an arc shape that is convex outward. As shown in Fig. 5, the base 2 includes a base main body 20 that supports components of the charger 1 from below, leg portions 21 that extend from four corners of the base main body 20 toward the floor surface, and base flanges 22 that extend upward from four sides of the base main body 20. In Fig. 3, reference numeral 27 indicates a power plug, and reference numeral 28 indicates a cooling fan.

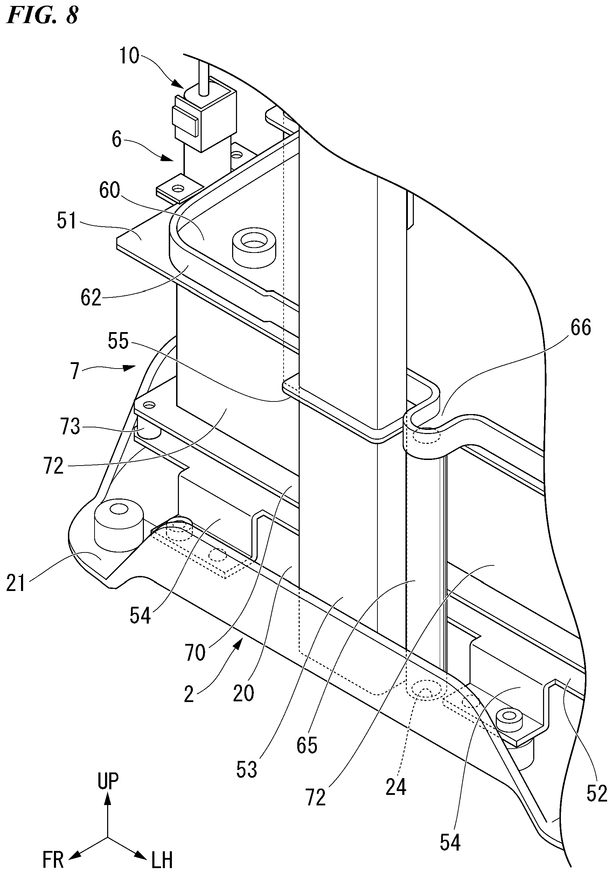

As shown in Fig. 5, the base 2 includes a recess 23 that forms a gap with the floor surface FL. In a cross-sectional view of Fig. 5, the recess 23 is formed by a lower surface of the base main body 20 and outer surfaces of a pair of leg portions 21. The recess 23 is provided with a drain port 24 (see Fig. 3) that communicates with a drain pipe 65 (see Fig. 8).

### <Exterior body 3>

In a front view of Fig. 4, the exterior body 3 has a trapezoidal shape in which a lower side is shorter than an upper side. The exterior body 3 has a rectangular tubular shape extending in the vertical direction so that an opening area increases in the upper side. A lower end of the exterior body 3 is joined to the base 2.

As shown in Fig. 3, a left-right width of the exterior body 3 is larger than a front-rear width of the exterior body 3. The exterior body 3 includes a front wall 31, a rear wall 32, a left wall 33, and a right wall 34. The front wall 31 and the rear wall 32 face each other with a space in the front-rear direction. The left wall 33 and the right wall 34 face each other with a space in the left-right direction. The front wall 31, the rear wall 32, the left wall 33, and the right wall 34 are mutually connected to adjacent walls. The front wall 31, the rear wall 32, the left wall 33, and the right wall 34 are integrally formed of the same member. In a bottom view of Fig. 3, connection portions of the front and rear walls 31 and 32 and the left and right walls 33 and 34 each have an arc shape that is convex outward.

As shown in Fig. 4, a recess 35 having a trapezoidal shape (hereinafter, also referred to as a "trapezoidal recess 35") that is recessed upward is provided in a lower portion of the exterior body 3. The trapezoidal recess 35 is provided at a center of the lower portion of each of the front wall 31, the rear wall 32, the left wall 33, and the right wall 34. A part of the base 2 is exposed to the outside through the trapezoidal recess 35.

### <Cover member 4>

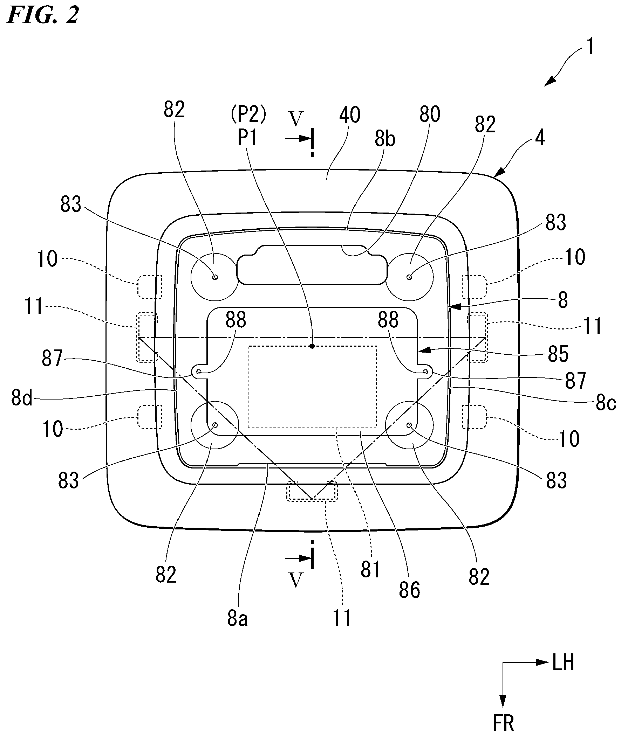

In a top view of Fig. 2, the cover member 4 has a rectangular frame shape with a long dimension in the left-right direction. In a top view of Fig. 2, a contour of the cover member 4 is larger than a contour of the base 2 (see Fig. 3). Four corners of the cover member 4 each have an arc shape that is convex outward.

As shown in Fig. 4, the cover member 4 is attached to an upper end portion of the exterior body 3. The cover member 4 covers the exterior body 3 from above. An introduction port 38 that is open so that cooling air can be introduced therethrough is provided between an upper end of the exterior body 3 and the cover member 4.

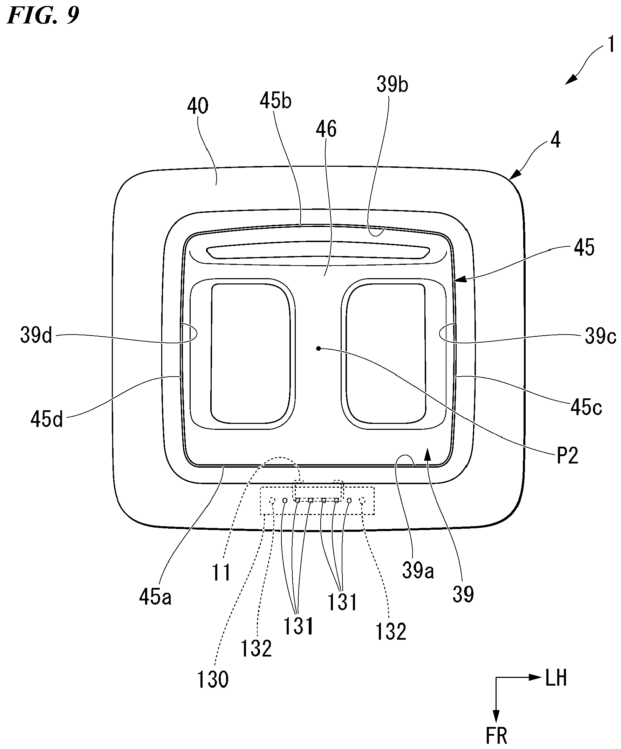

As shown in Fig. 5, the cover member 4 includes a cover main body 40 that forms the battery opening 39, and a cover-side flange 41 that extends downward from the cover main body 40. In a top view of Fig. 9, the battery opening 39 has a contour substantially the same as the contour of the battery 45.

As shown in Fig. 10, the battery 45 has a rectangular parallelepiped shape. For example, the battery 45 is a lithium ion battery 45.

In a top view of Fig. 9, the battery 45 includes a front side 45a extending in the left-right direction, a rear side 45b having a curved shape that is convex rearward, and a pair of a left side 45c and a right side 45d extending in the front-rear direction. In Figs. 9 and 10, reference numeral 46 indicates a grip portion (a handle) for gripping the battery 45.

In a top view of Fig. 9, the battery opening 39 is partitioned by a front edge 39a extending in the left-right direction, a rear edge 39b having a curved shape that is convex rearward, and a pair of a left edge 39c and a right edge 39d extending in the front-rear direction.

Accordingly, if insertion of the battery 45 into the battery opening 39 with the battery 45 reversed in the front-rear direction is attempted, a convex portion of the rear side 45b of the battery 45 comes into contact with the front edge 39a of the battery opening 39, and thus the battery 45 cannot be inserted into the battery opening 39.

### <Frame 5>

As shown in Fig. 6, the frame 5 includes a frame-shaped frame body 50 disposed in an upper portion of the charger 1, a plate-shaped first plate 51 disposed between the frame body 50 and the base 2 in the vertical direction, a plate-shaped second plate 52 disposed between the first plate 51 and the base 2 in the vertical direction, and a plurality of connection columns 53 connecting the frame body 50, the first plate 51, and the second plate 52 to each other.

The frame body 50 and the first plate 51 define the battery chamber 6.

The first plate 51 and the second plate 52 define the board chamber 7. The second plate 52 is connected to the base 2. In Fig. 6, reference numeral 54 indicates a second plate connecting leg that extends downward from an outer peripheral end of the second plate 52 in an L shape and connects the second plate 52 and the base 2 to each other.

The connection column 53 extends in the vertical direction. An upper end portion of the connection column 53 extends above the frame body 50. A lower end of the connection column 53 is connected to the base 2 (the base main body 20). In the embodiment, a total of three connection columns 53 are disposed with one at each of a front portion, a left portion, and a right portion of the charger 1. An upper half of the connection column 53 constitutes the guide mechanism 11 that guides the stage 8.

The frame body 50 is connected to an upper portion of the connection column 53 from outside.

The first plate 51 is connected to an intermediate portion of the connection column 53 in the vertical direction. In Fig. 6, reference numeral 55 indicates a first plate connecting piece that extends outward from an outer peripheral end of the first plate 51 and forms an insertion portion (a connection portion) for the connection column 53.

### <Battery chamber 6>

As shown in Fig. 5, the battery chamber 6 includes a battery chamber bottom wall 60 on which the battery 45 is placed, and a battery chamber side wall 61 connected to the battery chamber bottom wall 60.

The battery chamber bottom wall 60 has a rectangular plate shape. The battery chamber bottom wall 60 is fixed to an upper surface of the first plate 51. In a space above the battery chamber bottom wall 60, the stage 8 is accommodated together with the battery 45 (see Fig. 10). A contour of the battery chamber bottom wall 60 is larger than a contour of the battery 45 and the stage 8.

The battery chamber side wall 61 stands upward from an outer periphery of the battery chamber bottom wall 60.

A flange portion 62 (hereinafter, also referred to as a "battery chamber flange 62") extending upward from an outer periphery of the battery chamber bottom wall 60 is provided outside the battery chamber side wall 61. As shown in Fig. 6, the battery chamber flange 62 is provided to have a uniform height over the entire periphery of the battery chamber bottom wall 60.

As shown in Fig. 8, a drain pipe 65 that connects the battery chamber bottom wall 60 and the base 2 to each other is provided at a front portion of the battery chamber 6. The drain pipe 65 is a pipe extending in the vertical direction. In Fig. 8, reference numeral 66 indicates a drain connecting portion that extends forward from a front end of the battery chamber bottom wall 60 and to which an upper end of the drain pipe 65 is connected.

### <Board chamber 7>

As shown in Fig. 5, the board chamber 7 is disposed below the battery chamber 6. In a top view, the board chamber 7 is disposed inside an outer peripheral edge of the battery chamber bottom wall 60. In other words, in a top view, a contour of the board chamber 7 is smaller than a contour of the battery chamber bottom wall 60.

The board chamber 7 includes a plurality of boards 71 and 72 (hereinafter, also referred to as "control boards 71 and 72") for performing control to charge the battery 45 (see Fig. 10), and a board chamber bottom wall 70 on which the plurality of control boards 71 and 72 are stored.

The plurality of control boards 71 and 72 are a plurality of first control boards 71 mounted on a central portion of the board chamber bottom wall 70, and a plurality of second control boards 72 standing upward from an outer periphery of the board chamber bottom wall 70.

The plurality of first control boards 71 are surrounded by the plurality of second control boards 72.

The plurality of second control boards 72 are disposed with a control circuit for performing control to charge the battery 45 facing inward (a center of the board chamber 7). The second control board 72 functions as a side wall of the battery chamber 6. An outer surface of the second control board 72 faces an inner surface of the exterior body 3. Note that fins or a heat sink may be provided on the outer surface of the second control board 72.

In a top view, the board chamber bottom wall 70 has a rectangular plate shape smaller than that of the battery chamber bottom wall 60. The board chamber bottom wall 70 is disposed above the second plate 52. The board chamber bottom wall 70 is fixed to an upper surface of the second plate 52 via a columnar spacer 73 extending in the vertical direction. Note that fins or a heat sink may be provided on a lower surface of the board chamber bottom wall 70.

### <Stage 8>

As shown in Fig. 5, the stage 8 is disposed inside the battery opening 39. The stage 8 is movable in the vertical direction. The terminal portion 9 is disposed below the stage 8 in a state in which the battery 45 is not placed on the stage 8 (a position of the stage 8 shown by a two-dot chain line in Fig. 5). When the battery 45 is placed on the stage 8, the stage 8 moves downward to fit the battery 45 to the terminal portion 9. In Fig. 5, a state in which the stage 8 is moved to the lowermost position is shown by a solid line.

In a top view of Fig. 2, the stage 8 has a rectangular shape. In a top view, the stage 8 has a contour that is substantially the same as a contour of the battery 45 (see Fig. 9). In a top view of Fig. 2, the stage 8 includes a front side 8a extending in the left-right direction, a rear side 8b having a curved shape that is convex rearward, and a pair of a left side 8c and a right side 8d extending in the front-rear direction.

The stage 8 is provided with a terminal opening 80 that is open at a location corresponding to the terminal portion 9, and a communication opening 81 that communicates with an inside of the charger 1.

The terminal opening 80 is disposed at a rear portion of the stage 8. In a top view of Fig. 2, the terminal opening 80 extends in the left-right direction.

The communication opening 81 is disposed in a front portion of the stage 8 (in front of the terminal opening 80). In a top view of Fig. 2, the communication opening 81 has a rectangular shape with a long dimension in the left-right direction.

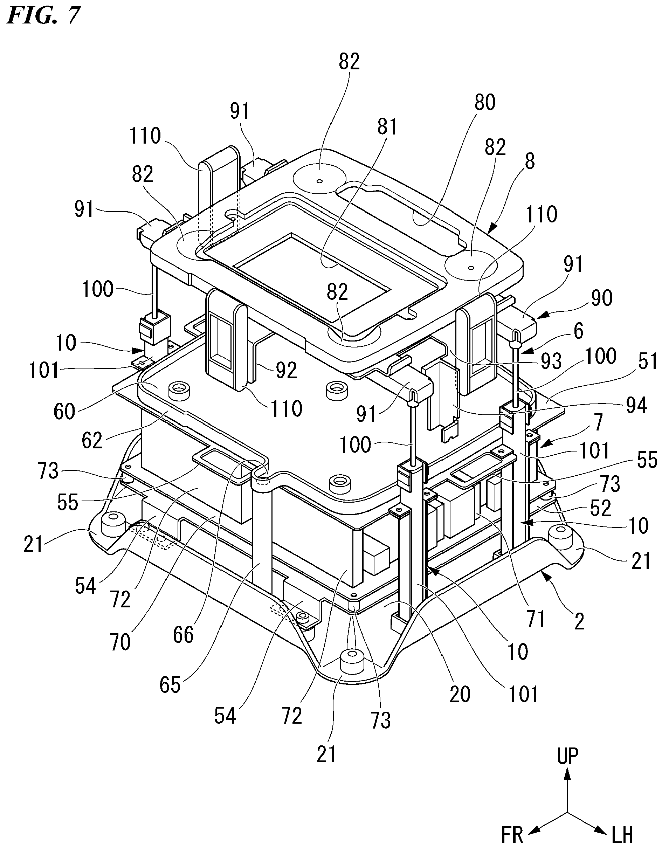

A lid 85 that covers the communication opening 81 is provided on an upper surface of the stage 8. The lid 85 is detachably attached to the stage 8. In a top view of Fig. 2, the lid 85 includes a lid main body 86 having a rectangular shape larger than the communication opening 81 (see Fig. 7), and a pair of left and right lid extending pieces 87 that extend outward from left and right outer ends of the lid main body 86. In Fig. 2, reference numeral 88 indicates an insertion hole through which a fastening member such as a bolt for fixing each of the lid extending pieces 87 to the stage 8 is inserted. Fig. 7 shows a state in which the lid 85 is removed from the stage 8.

Drainage recesses 82 that are recessed downward are provided at four corners of the stage 8. In a top view of Fig. 2, each of the drainage recesses 82 has a circular shape. The drainage recess 82 is obliquely recessed to be located lower toward a center side thereof. A corner of a front portion of the lid 85 forms the drainage recess 82 together with the stage 8. A drainage hole 83 that penetrates the stage 8 in a thickness direction (the vertical direction) is provided at the center of the drainage recess 82.

As shown in Fig. 7, a stage support 90 that supports the stage 8 from below is attached to a lower surface of the stage 8. The stage support 90 includes a pair of front and rear laterally outward extending portions 91 that extend laterally outward from left and right side portions of the stage 8, a first downward extending portion 92 that extends downward from the front portion of the stage 8, a pair of left and right second downward extending portions 93 that extend downward from the left and right side portions of the stage 8, and a front downward extending portion 94 that extends forward and outward from each of the second downward extending portions 93.

As shown in Fig. 6, stage biasing members 95 that constantly bias the stage 8 upward are provided on the left and right side portions of the stage 8. A pair of left and right stage biasing members 95 are provided with one at each of the left and right side portions of the charger 1. In the embodiment, each of the stage biasing members 95 is a coil spring that extends in the vertical direction.

An upper end of the stage biasing member 95 is attached to each of the left and right side portions of the frame body 50. A lower end of the stage biasing member 95 is attached to a lower end of the front downward extending portion 94 of the stage support 90.

The stage 8, which moves downward when the battery 45 (see Fig. 10) is placed on the stage 8, is moved upward by the stage biasing member 95. Specifically, when the battery 45 is not placed on the stage 8, the stage biasing member 95 restores the stage 8 accommodated in the battery chamber 6 to a position where it is when the battery 45 is not placed on the stage 8. That is, when the battery 45 is removed from the terminal portion 9 and the battery 45 is taken out of the battery opening 39, the stage biasing member 95 returns the stage 8 accommodated in the battery chamber 6 to its original position.

In Fig. 5, the stage 8 that has moved to the lowermost position is shown by a solid line, and the stage 8 that is not moved downward (that is at the original position) is shown by a two-dot chain line.

### <Terminal portion 9>

As shown in Fig. 5, the terminal portion 9 is disposed at a position (a lower position) on a side opposite to a position (an upper position) on a side on which the battery 45 is to be placed with respect to the stage 8 in a state in which the battery 45 is not placed on the stage 8. The terminal portion 9 is fixed to a terminal support plate 96 extending in the left-right direction. Left and right both end portions of the terminal support plate 96 are fixed to an upper surface of the battery chamber bottom wall 60 via column members (not shown) extending in the vertical direction.

A portion of the terminal portion 9 above an upper surface of the terminal support plate 96 is electrically connected to a battery side terminal (not shown) provided on a bottom portion of the battery 45 by being fitted to the bottom portion of the battery 45.

A portion of the terminal portion 9 below a lower surface of the terminal support plate 96 is electrically connected to the control boards 71 and 72 and the like via various wirings (not shown).

The terminal portion 9 is disposed at a position higher than that of an extending end of the battery chamber flange 62. In other words, a lower end of the terminal portion 9 is disposed above an upper end of the battery chamber flange 62.

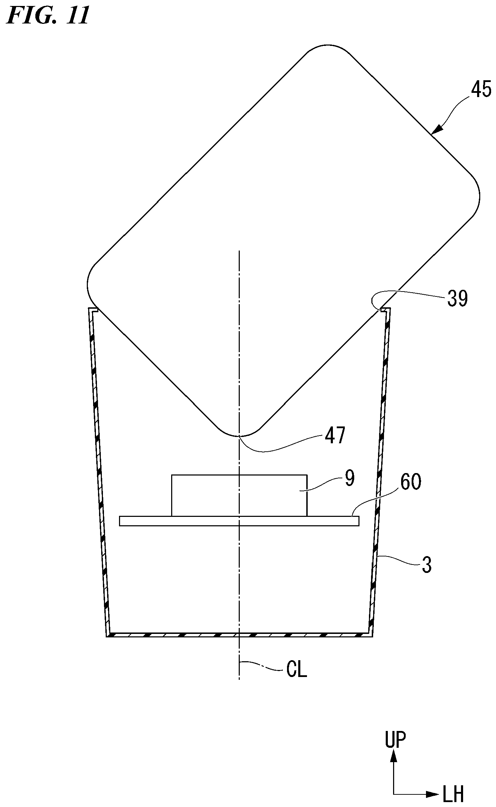

As shown in Fig. 11, the terminal portion 9 is disposed at a position lower than that of a portion 47 that most protrudes toward the terminal portion 9 when the battery 45 is obliquely inserted into the battery opening 39 (hereinafter, also referred to as a "downward maximum protruding end 47").

Here, the downward maximum protruding end 47 of the battery 45 means a lower end of the battery at a position where a central axis line CL of the battery opening 39 bisects a corner of the rectangular parallelepiped battery 45 when the rectangular parallelepiped battery 45 is obliquely inserted into the battery opening 39. That is, the downward maximum protruding end 47 of the battery 45 is a lower end when the central axis line CL of the battery opening 39 becomes a bisector of a corner of the battery 45.

### <Buffer mechanism 10>

The buffer mechanism 10 (see Fig. 6) suppresses the fitting speed of the battery 45 to the terminal portion 9 (see Fig. 5) when the battery 45 (see Fig. 10) is placed on the stage 8. Here, the fitting speed means a speed when the terminal portion 9 is fitted to the bottom portion of the battery 45. The fitting speed is a relative speed between the battery 45 and the terminal portion 9 at the time of fitting. In the embodiment, since the terminal portion 9 is fixed at a fixed position with respect to the battery chamber bottom wall 60, the fitting speed is a downward moving speed (a falling speed) of the battery 45. According to the embodiment, the fitting speed of the battery 45 to the terminal portion 9 is slow as compared with a configuration without the buffer mechanism 10, so that it is possible to avoid the occurrence of impact on the terminal portion 9.

In a top view of Fig. 2, a plurality of buffer mechanisms 10 are disposed point-symmetrically on opposite sides of the stage 8 with a center position P1 of the stage 8 as a center of symmetry. In the embodiment, the buffer mechanisms 10 are disposed with two on each of the left side 8c and the right side 8d of the stage 8 two-fold symmetrically (axisymmetrically with a left-right axis as an axis of symmetry). In a top view of Fig. 2, the two buffer mechanisms 10 are disposed to interpose the guide mechanism 11 therebetween from outside in the front-rear direction on two sides (a left side 8c and a right side 8d) of the stage 8.

As shown in Fig. 6, the buffer mechanism 10 includes a piston rod 100 that extends in the vertical direction, a cylindrical cylinder 101 that slidably accommodates the piston rod 100, and a biasing member (hereinafter, also referred to as a "return spring") (not shown) such as a spring that biases the piston rod 100 upward. For example, a mass-produced damper is used as the buffer mechanism 10.

As shown in Fig. 7, an upper end of the piston rod 100 is attached to the laterally outward extending portions 91 of the stage support 90. A lower end of the cylinder 101 is fixed to the base 2. The return spring (not shown) suppresses an impact force when the terminal portion 9 (see Fig. 5) is fitted to the bottom portion of the battery 45.

### <Guide mechanism 11>

The guide mechanism 11 (see Fig. 6) guides the stage 8 when the battery 45 (see Fig. 10) is placed on the stage 8.

In a top view of Fig. 2, the plurality of guide mechanisms 11 are disposed to surround a centroid position P2 of the battery 45 (see Fig. 9). Here, the centroid position of the battery 45 is substantially the same as the center position of the battery 45. In the embodiment, three guide mechanisms 11 are disposed to form a triangular region (a region surrounded by a one-dot chain line forming an inverted triangle in a top view of Fig. 2) surrounding the centroid position P2 of the battery 45.

The three guide mechanisms 11 are disposed with one on each of three sides of the stage 8. In the embodiment, the three guide mechanism 11 are disposed with one on each of the front side 8a, the left side 8c, and the right side 8d of the stage 8.

Hereinafter, the guide mechanism 11 disposed on the front side 8a of the stage 8 is also referred to as a "front guide mechanism 11," the guide mechanism 11 disposed on the left side 8c of the stage 8 is also referred to as a "left guide mechanism 11," and the guide mechanism 11 disposed on the right side 8d of the stage 8 is also referred to as a "right guide mechanism 11."

The front guide mechanism 11 is disposed at the center position of the stage 8 in the left-right direction.

The left guide mechanism 11 and the right guide mechanism 11 are disposed at positions offset rearward from the center position of the stage 8 in the front-rear direction.

As shown in Fig. 6, the guide mechanism 11 includes a slider 110 (see Fig. 7) and a rail 111 that slidably supports the slider 110.

As shown in Fig. 7, the slider 110 is fixed to each of the first downward extending portion 92 and the second downward extending portion 93 of the stage support 90.

As shown in Fig. 6, the rail 111 is fixed to an inner portion of the upper half of the connection column 53.

### <LED board 130>

As shown in Fig. 9, the cover main body 40 may be provided with an LED board 130. The LED board 130 is disposed between the cover main body 40 and the guide mechanism 11 in the vertical direction. The LED board 130 has a rectangular plate shape with a long dimension in the left-right direction. A plurality of LED elements 131 are linearly arranged on the LED board 130 at intervals in the left-right direction. Left and right end portions of the LED board 130 are attached to the cover main body 40 at positions avoiding the guide mechanism 11. For example, the left and right end portions of the LED board 130 are fixed to the cover main body 40 with a fixing member 132 such as a tapping screw. In a top view, the guide mechanism 11 is disposed at a position overlapping a left-right central portion of the LED board 130. In a top view, the guide mechanism 11 is located rearward from the front end of the LED board 130.

A portion of the cover main body 40 where the LED board 130 is provided (a front side portion extending in the left-right direction) needs to have at least a width (a front-rear length) of the LED board 130. In the embodiment, the guide mechanism 11 is disposed using the width of the LED board 130. Specifically, the guide mechanism 11 is disposed in a portion of the cover main body 40 where the LED board 130 is provided, and the guide mechanism 11 is not disposed in a portion of the cover main body where the LED board 130 is not provided (a rear side portion extending in the left-right direction). Accordingly, a width of the portion where the LED board 130 is not provided can be made as narrow as possible, and the installation area of the charger 1 can be reduced.

### <Operation>

Hereinafter, an operation of the charger 1 of the embodiment will be described.

In the embodiment, in a state in which the battery 45 is not placed on the stage 8 (hereinafter, also referred to as an "initial state"), the stage 8 is disposed inside the battery opening 39 (see Fig. 5). In the initial state, the terminal portion 9 is disposed below the stage 8. In Fig. 5, the stage 8 at a position of the initial state is shown by a two-dot chain line.

In the initial state, when the battery 45 is placed on the stage 8, the stage 8 moves downward together with the battery 45 to be close to the battery chamber bottom wall 60. In Fig. 5, the stage 8 at a position close to the battery chamber bottom wall 60 is shown by a solid line.

In the embodiment, since the pair of left and right stage biasing members 95 (only the left stage biasing member 95 is shown in Fig. 6) constantly bias the stage 8 upward, the stage 8 moves downward together with the battery 45 against a biasing force of the members 95.

In addition, in the embodiment, since the three guide mechanisms 11 (see Fig. 6) are disposed with one on each of the three sides of the stage 8, the stage 8 can be smoothly moved downward together with the battery 45. As the stage 8 moves downward, the terminal portion 9 gradually protrudes upward from the terminal opening 80.

In a state in which the stage 8 descends together with the battery 45 to be close to the battery chamber bottom wall 60 (hereinafter, also referred to as a "stage descent state"), the terminal portion 9 is fitted to the bottom portion of the battery 45 through the terminal opening 80.

In the embodiment, the two buffer mechanisms 10 (see Fig. 6) are disposed to interpose the guide mechanism 11 therebetween from outside in the front-rear direction on the two sides of the stage 8, so that, when the battery 45 is fitted to the terminal portion 9, a load acting on the terminal portion 9 can be suppressed in a balanced manner.

In the stage descent state, when the battery 45 is removed from the terminal portion 9 and the battery 45 is taken out of the battery opening 39, the stage 8 returns to the original position (the position of the initial state).

In the embodiment, since the pair of left and right stage biasing members 95 (see Fig. 6) constantly bias the stage 8 upward, the stage 8 on which the battery 45 is not placed can be smoothly moved to the original position.

As described above, the charger 1 according to the above-described embodiment includes the stage 8 on which the portable battery 45 used in the electric vehicle can be placed, and the terminal portion 9 that is provided at a position on a side opposite to a position on a side on which the battery 45 is to be placed with respect to the stage 8 in a state in which the battery 45 is not placed on the stage 8. The stage 8 moves together with the battery 45 to fit the battery 45 to the terminal portion 9 when the battery 45 is placed on the stage 8. The charger further includes the buffer mechanism 10 that suppresses a fitting speed of the battery 45 to the terminal portion 9 when the battery 45 is placed on the stage 8.

According to this configuration, the buffer mechanism 10 that suppresses the fitting speed of the battery 45 to the terminal portion 9 when the battery 45 is placed on the stage 8 is provided, so that, when the battery 45 is fitted to the terminal portion 9, the fitting speed of the battery 45 to the terminal portion 9 is suppressed by the buffer mechanism 10, and thus it is possible to avoid the occurrence of impact on the terminal portion 9. Therefore, when the battery 45 is fitted to the terminal portion 9 of the charger 1, a load acting on a terminal portion 9 can be suppressed as much as possible.

In the above-described embodiment, the stage 8 is movable in the vertical direction, and the terminal portion 9 is disposed below the stage 8 in a state in which the battery 45 is not placed on the stage 8, so that the following effects are exhibited. Even in a case in which the battery 45 is placed on the stage 8 from above, when the battery 45 is fitted to the terminal portion 9, the fitting speed of the battery 45 to the terminal portion 9 is suppressed by the buffer mechanism 10, and thus a load acting on the terminal portion 9 can be suppressed as much as possible.

In the above-described embodiment, the stage 8 has a rectangular shape when viewed in a moving direction of the stage 8, and the plurality of buffer mechanisms 10 are disposed point-symmetrically on opposite sides of the stage 8 with the center position P1 of the stage 8 as a center of symmetry when viewed in the moving direction, so that the following effects are exhibited. The plurality of buffer mechanisms 10 are disposed in a balanced manner in a peripheral direction with respect to the centroid position of the battery 45, so that, when the battery 45 is fitted to the terminal portion 9, a load acting on the terminal portion 9 can be suppressed in a balanced manner. In addition, since a load on the buffer mechanisms 10 can be reduced as compared with a configuration provided with only one buffer mechanism 10, it is possible to sufficiently ensure a function (a buffer function) while improving durability of the buffer mechanism 10.

In the above-described embodiment, the guide mechanism 11 that guides the stage 8 when the battery 45 is placed on the stage 8 is further provided, and the plurality of guide mechanisms 11 are disposed to surround the centroid position P2 of the battery 45 when viewed in a moving direction of the stage 8, so that the following effects are exhibited. The plurality of guide mechanisms 11 are disposed at intervals in the peripheral direction to surround the centroid position P2 of the battery 45, so that, when the battery 45 is placed on the stage 8, the stage 8 can be smoothly moved toward the terminal portion 9.

In the above-described embodiment, since the plurality of guide mechanisms 11 are disposed with one on each of the three sides of the stage 8, the stage 8 can be smoothly moved while minimizing the number of guide mechanisms 11.

In the above-described embodiment, when viewed in the moving direction of the stage 8, the plurality of buffer mechanisms 10 are disposed to interpose the guide mechanism 11 therebetween on the two sides of the stage 8, so that the following effects are exhibited. The plurality of buffer mechanisms 10 are disposed in a balanced manner with respect to the position of the guide mechanism 11 as compared with a configuration in which only one buffer mechanism 10 is disposed on one side of the stage 8, so that the battery 45 can be smoothly fitted to the terminal portion 9. In addition, since a load on the buffer mechanisms 10 can be reduced as compared with the configuration in which only one buffer mechanism 10 is disposed, it is possible to sufficiently ensure a function (a buffer function) while improving durability of the buffer mechanism 10.

Incidentally, as the disposition of the buffer mechanism 10, it is conceivable to dispose only one buffer mechanism 10 on the front side 8a of the stage 8. However, if only one buffer mechanism 10 is disposed on the front side 8a of the stage 8, a force in a direction of suppressing the downward movement of the stage 8 acts only on the front portion of the stage 8, so that there is a high possibility that the battery 45 and the terminal portion 9 cannot be smoothly fitted to each other. On the other hand, according to the embodiment, the two buffer mechanisms 10 are disposed on the left side 8c and the right side 8d of the stage 8 to interpose the guide mechanism 11 therebetween, so that a force acts in a direction of suppressing the downward movement of the entire stage 8, and thus the battery 45 and the terminal portion 9 can be smoothly fitted to each other. In addition, since the buffer mechanisms 10 are provided only on the left side 8c and the right side 8d of the stage 8, a front-rear width of each of the front portion and the rear portion of the cover member 4 can be narrowed, so that the installation area of the charger 1 can be reduced as compared with a case in which the buffer mechanisms 10 are provided on the front side 8a or the rear side 8b of the stage 8.

In the above-described embodiment, the charger 1 is provided with the opening 39 that is open so that the battery 45 can be inserted and taken out therethrough, and the stage 8 is disposed inside the opening 39, so that the portion of the charger 1 where the opening 39 is formed can have the function of guiding the battery 45.

In the above-described embodiment, the terminal portion 9 is disposed at a position lower than that of the portion 47 that most protrudes toward the terminal portion 9 when the battery 45 is obliquely inserted into the opening 39, so that the following effects are exhibited. Even in a case in which the battery 45 is inserted into the opening 39 at an incorrect angle, the battery 45 does not come into contact with the terminal portion 9, so that the terminal portion 9 can be sufficiently protected.

In the above-described embodiment, since the buffer mechanism 10 and the guide mechanism 11 are provided separately and independently, a mass-produced damper can be used as the buffer mechanism 10, so that cost reduction can be achieved as compared with a case of using a dedicated damper.

### <Modification example>

In the above-described embodiment, an example in which the installation surface on which the charger 1 is installed is the indoor flat floor surface FL has been described, but the present invention is not limited to this. For example, the installation surface of the charger 1 may be the outdoor ground or may be an inclined surface that inclines with respect to the horizontal plane.

In the above-described embodiment, an example in which the stage 8 has a rectangular shape when viewed in the moving direction of the stage 8 has been described, but the present invention is not limited to this. For example, when viewed from the moving direction of the stage 8, the stage 8 may have a polygonal shape other than a rectangular shape, and may have a circular shape, or an elliptical shape.

In the above-described embodiment, an example in which the plurality of buffer mechanisms 10 are disposed point-symmetrically on opposite sides of the stage 8 with the center position P1 of the stage 8 as a center of symmetry when viewed in the moving direction of the stage 8 has been described, but the present invention is not limited to this. For example, when viewed in the moving direction of the stage 8, the plurality of buffer mechanisms 10 may be randomly disposed.

In the above-described embodiment, an example in which a plurality of buffer mechanisms 10 are disposed has been described, but the present invention is not limited to this. For example, only one buffer mechanism 10 may be disposed.

In the above-described embodiment, an example in which a plurality of guide mechanisms 11 are disposed to surround the centroid position P2 of the battery 45 when viewed in a moving direction of the stage 8 has been described, but the present invention is not limited to this. For example, the plurality of guide mechanisms 11 may be disposed not to surround a centroid position P2 of the battery 45. Alternatively, two guide mechanisms 11 may be disposed, and the centroid position P2 of the battery 45 and the two guide mechanisms 11 may be linearly arranged.

In the above-described embodiment, an example in which a plurality of guide mechanism 11 are disposed has been described, but the present invention is not limited to this. For example, only one guide mechanism 11 may be disposed.

In the above-described embodiment, an example in which the plurality of buffer mechanisms 10 are disposed to interpose the guide mechanism 11 therebetween on the two sides of the stage 8 when viewed in the moving direction of the stage 8 has been described, but the present invention is not limited to this. For example, a plurality of buffer mechanisms 10 may be disposed to interpose the guide mechanism 11 therebetween on one side or three or more sides of the stage 8. That is, when viewed in the moving direction of the stage 8, the plurality of buffer mechanisms 10 may be disposed to interpose the guide mechanism 11 therebetween on at least one side of the stage 8.

In the above-described embodiment, an example in which the stage 8 is disposed inside the opening 39 has been described, but the present invention is not limited to this. For example, the stage 8 may be disposed outside the opening 39.

In the above-described embodiment, an example in which the buffer mechanism 10 and the guide mechanism 11 are provided separately and independently has been described, but the present invention is not limited to this. For example, the buffer mechanism 10 and the guide mechanism 11 may be integrally provided. For example, the buffer mechanism 10 may have each of a buffer function for the battery 45 and a guide function for the stage 8.

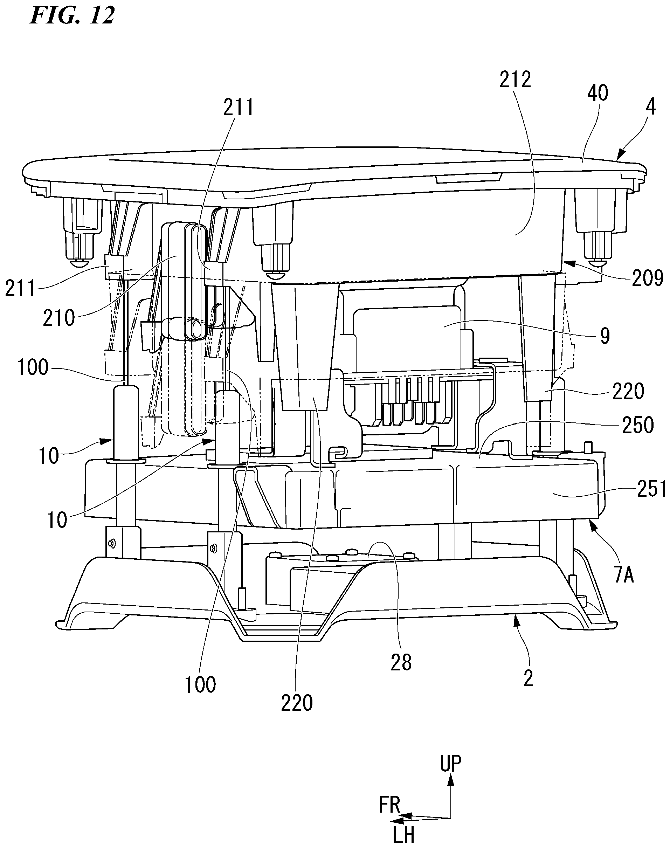

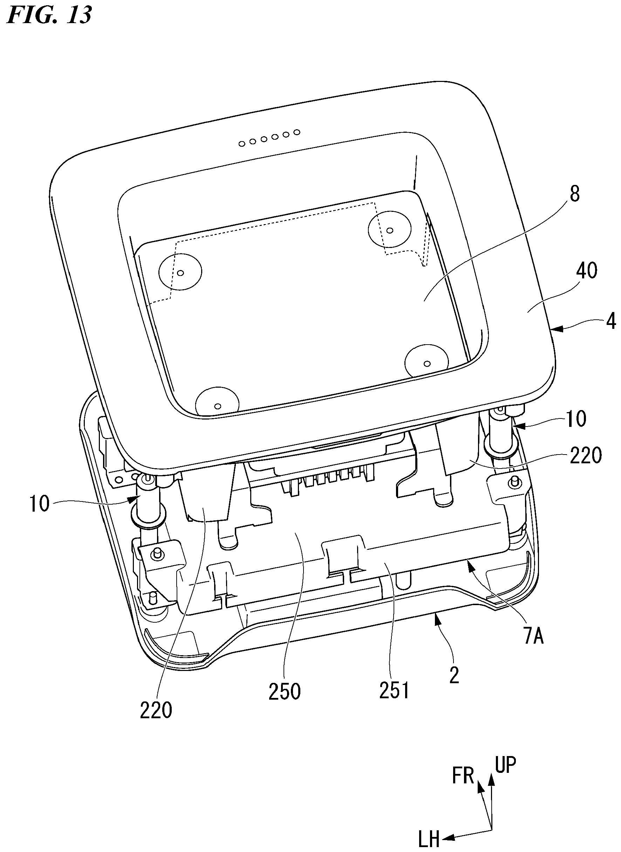

In the above-described embodiment, an example in which the slider 110 is fixed to each of the first downward extending portion 92 and the second downward extending portion 93 of the stage support 90 has been described, but the present invention is not limited to this. For example, as shown in Fig. 12, a stage peripheral component 209 including a slider 210 may be integrally molded. For example, a resin material is used as a forming material for the stage peripheral component 209. In Fig. 12, reference numeral 210 indicates a slider, reference numeral 211 indicates a rod upper support portion that supports the upper end of the piston rod 100, and reference numeral 212 indicates a frame wall having a rectangular frame shape that follows the contour of the stage 8 (see Fig. 13).

In this modification example, the stage 8 (see Fig. 13), the slider 210, the rod upper support portion 211, and the frame wall 212 are integrally formed of the same member. That is, the stage 8 and the stage peripheral component 209 are integrally formed of the same member. Accordingly, a peripheral structure including the stage 8 is simplified and assembly of the charger is facilitated.

In Fig. 12, reference numeral 220 indicates a downward extending wall that extends downward from each of four corners of the cover main body 40. The downward extending wall 220 is disposed inside the frame wall 212. The downward extending wall 220 functions as a guide wall that guides the movement of the stage 8 in the vertical direction via the frame wall 212. In Fig. 12, the stage peripheral component 209 at the position of the initial state is shown by a solid line, and the stage peripheral component 209 at a position close to the battery chamber bottom wall (a board chamber top wall 250) is shown by a two-dot chain line.

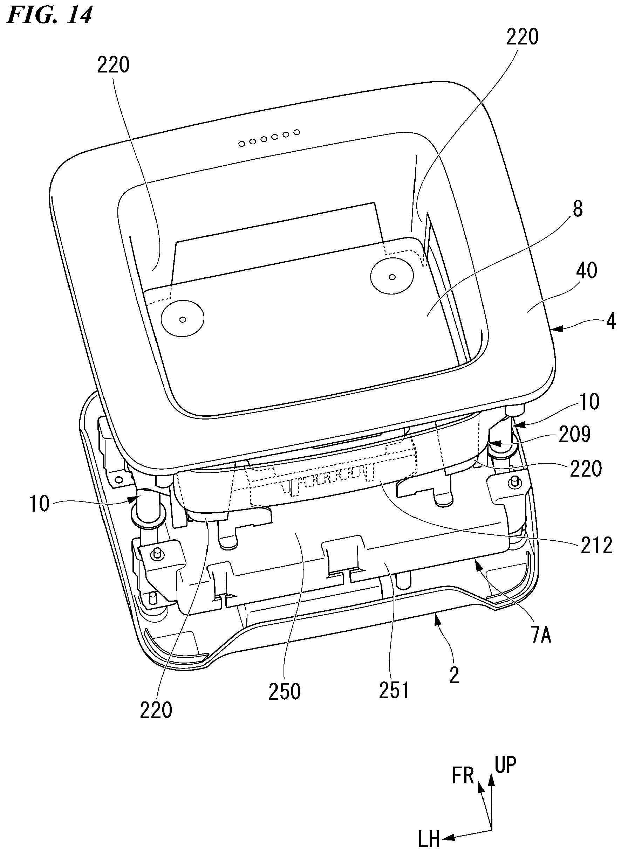

In Fig. 13, the stage 8 at a position of the initial state (a state of being located at the uppermost position) is shown. In Fig. 14, a state in which the stage 8 has moved to the lowermost position is shown.

Incidentally, in a case in which the cover main body 40 is provided with the downward extending wall 220, when the stage 8 moves downward, a gap is generated between the stage 8 and the cover member 4 in the vertical direction. On the other hand, in this modification example, a vertical height of the frame body 212 is set to a size to block the gap, so that, even in a case in which the stage 8 moves downward, it is possible to prevent a gap from being generated between the stage 8 and the cover member 4. Therefore, it is possible to prevent an object from falling between the stage 8 and the cover member 4, or the like.

In the above-described embodiment, an example in which the board chamber 7 including the plurality of control boards 71 and 72, and the board chamber bottom wall 70 on which the plurality of control boards 71 and 72 are stored has been described, but the present invention is not limited to this. For example, as shown in Fig. 12, a board chamber 7A may include a board chamber top wall 250 on which the plurality of control boards (not shown) are stored, and a flange wall 251 that extends downward from an outer periphery of the board chamber top wall 250. That is, the board chamber 7A of this modification example has a configuration in which the board chamber 7 of the embodiment is inverted in the vertical direction. For example, the plurality of control boards (not shown) are fixed to the board chamber top wall 250 by potting or the like. In this modification example, the board chamber top wall 250 also functions as a battery chamber bottom wall.

The plurality of control boards (not shown) include a plurality of first control boards mounted on a central portion of the board chamber top wall 250 and a plurality of second control boards standing upward from an outer periphery of the board chamber top wall 250. In this modification example, a height of the second control board is lower than a height of the first control board. The cooling fan 28 is disposed at a position overlapping a central portion of the board chamber top wall 250 in a top view. In other words, the cooling fan 28 is disposed at a position avoiding the plurality of first control boards (a position overlapping the plurality of second control boards in a top view). That is, the cooling fan 28 is disposed at a portion where a height of the board is low. Accordingly, the overall height of the charger can be shortened.

Note that the present invention is not limited to the above-described embodiment. For example, the saddle-ride type electric vehicle includes all vehicles in which a driver rides across a vehicle body, and also include not only a motorcycle (including a motorized bicycle and a scooter type vehicle) but also a three-wheeled vehicle (including a vehicle having two front wheels and one rear wheel as well as a vehicle having one front wheel and two rear wheels). Further, the present invention is applicable not only to a motorcycle but also to a four-wheeled vehicle such as an automobile.

For example, the charger is not limited to a charger for a mobile battery of the motorcycle, and may be applied to a charger for an electric device other than the electric vehicle.

The configuration in the above-described embodiment is an example of the present invention, and various changes can be made without departing from the scope of the present invention, such as replacing the components of the embodiment with the known components.

### BRIEF DESCRIPTION OF THE REFERENCE SYMBOLS

1 Charger
8 Stage
9 Terminal portion
10 Buffer mechanism
11 Guide mechanism
39 Battery opening (opening)
45 Battery
47 Downward maximum protruding end (portion most protruding toward terminal portion)
P1 Center position of stage
P2 Centroid position of battery

## Claims

1. A terminal connection method, comprising:
a placing step of placing a portable battery (45) to a stage (8);
a moving step of moving the stage (8) together with the battery (45) against a biasing force of a biasing member (95); and
a connecting step of connecting a battery side terminal provided on a bottom portion of the battery (45) to a terminal portion (9) that is provided at a position on a side opposite to a position on a side on which the battery (45) is to be placed with respect to the stage (8) in a state in which the battery (45) is not placed on the stage (8).

2. The terminal connection method according to claim 1,
in the moving step, the stage (8) moves in a vertical direction, and
wherein the terminal portion (9) is disposed below the stage (8) in a state in which the battery (45) is not placed on the stage (8).

3. The terminal connection method according to claim 1 or 2,
wherein the stage (8) has a rectangular shape when viewed in a moving direction of the stage (8), and
in the connecting step, the stage (8) connects the battery side terminal to the terminal portion (9) using a plurality of buffer mechanisms (10) that are disposed point-symmetrically on opposite sides of the stage (8) with a center position (PI) of the stage (8) as a center of symmetry when viewed in a moving direction of the stage (8).

4. The terminal connection method according to any one of claims 1 to 3,
in the moving step, the stage (8) is guided by a plurality of guide mechanisms (11) that are disposed to surround a centroid position (P2) of the battery (45) when viewed in a moving direction of the stage (8).

5. The terminal connection method according to claim 4,
wherein the stage (8) has a rectangular shape, and
in the moving step, the stage (8) is guided by the plurality of guide mechanisms (11) that are disposed with one on each of three sides of the stage (8) when viewed in the moving direction.

6. The terminal connection method according to claim 4 or 5,
wherein the stage (8) has a rectangular shape when viewed in a moving direction of the stage (8), and
in the connecting step, the stage (8) connects the battery side terminal to the terminal portion (9) using a plurality of buffer mechanisms (10) that are disposed to interpose the guide mechanism (11) therebetween on at least one side of the stage (8) when viewed in the moving direction.

7. A Holding device, comprising:
a stage (8) on which a portable battery (45) can be placed;
a biasing member (95) that biases the stage (8); and
a terminal portion (9) that is provided at a position on a side opposite to a position on a side on which the battery (45) is to be placed with respect to the stage (8) in a state in which the battery (45) is not placed on the stage (8),
wherein the stage (8) moves together with the battery (45) against a biasing force of the biasing member (95) to connect a battery side terminal provided on a bottom portion of the battery (45) to the terminal portion (9).

8. The Holding device according to claim 7,
wherein the stage (8) is movable in a vertical direction, and
wherein the terminal portion (9) is disposed below the stage (8) in a state in which the battery (45) is not placed on the stage (8).

9. The Holding device according to claim 7 or 8,
wherein the stage (8) has a rectangular shape when viewed in a moving direction of the stage (8), and further comprising:
a plurality of buffer mechanisms (10) that are disposed point-symmetrically on opposite sides of the stage (8) with a center position (PI) of the stage (8) as a center of symmetry when viewed in a moving direction of the stage (8).

10. The Holding device according to any one of claims 7 to 9, further comprising:
a plurality of guide mechanisms (11) that are disposed to surround a centroid position (P2) of the battery (45) when viewed in a moving direction of the stage (8).

11. The Holding device according to claim 10,
wherein the stage (8) has a rectangular shape when viewed in a moving direction of the stage (8), and
wherein the stage (8) is guided by the plurality of guide mechanisms (11) that are disposed with one on each of three sides of the stage (8) when viewed in the moving direction.

12. The Holding device according to claim 10 or 11,
wherein the stage (8) has a rectangular shape when viewed in a moving direction of the stage (8), and further comprising:
a plurality of buffer mechanisms (10) that are disposed to interpose the guide mechanism (11) therebetween on at least one side of the stage (8) when viewed in the moving direction.
